# EUROPEAN PATENT SPECIFICATION

(11) **EP 0 599 341 B1**
(45) Date of publication and mention of the grant of the patent: **07.03.2007**
(21) Application number: 93119113.4
(22) Date of filing: 26.11.1993
(51) Int. Cl.: G01F 1/115, G01F 1/10, G01F 1/12

(54) **Device for the measuring and/or the volumetric control of a fluid**
Vorrichtung zu volumetrischen Messung und Reglung des Durchflusses
Dispositif pour la mesure et le contrôle volumétrique du débit fluidique

(30) Priority: 27.11.1992 IT AL920003
(43) Date of publication of application: 01.06.1994
(60) Divisional application: 03027580.4
(73) Proprietor: ELTEK S.p.A., I-15033 Casale Monferrato (Alessandria) (IT)
(72) Inventor: Sassone, Luigi, Casale Monferrato (AL) (IT)
(74) Representative: Dini, Roberto

(56) References cited:
- EP-A- 0 517 293
- DE-A- 2 508 927
- DE-A- 2 629 766
- DE-A- 4 111 001
- FR-A- 509 015
- FR-A- 2 607 248
- US-A- 2 777 464
- US-A- 3 002 384
- US-A- 3 053 087
- US-A- 3 164 020

## Description

The present invention refers to a device connectable to a supply line of a fluid, for the measurement and/or the volumetric control of the fluid itself.

Devices are known for the measurement and/or the volumetric control of liquids and fluids in general, flowing through conduits at predetermined rate, in order to have the exact control of the quantity supplied into containers or, in any way, flowing from a source. Such devices are for example used for metering water required for the operation of domestic washing machines (such as laundry washing machines and dishwashing machines), or in water distribution systems, in connection with meters.

Certain devices of known type are mainly provided for checking eventual losses or excessive deliveries of liquid, and thus are not characterised by an high metering precision; in these devices, the electrovalve enabling the delivery, or interrupting it, is always in the open position and is made to close only in the case of anomalous delivery.

Other devices for the measurement and/or the volumetric control of known type, in order to ensure a greater operating precision, are realised so as to present small passage conduits, so as to increase the speed of the liquid flowing down, or have a flow meter comprising a tangential impeller, having metallic inserts, and a detector of the rotation of such inserts, and consequently of the impeller revolutions.

In such devices for the measurement and/or the volumetric control, the flow of the liquid to be measured is deviated in respect of the minimum path trajectory, with the consequence of the creation of turbulence, in the entry and/or the exit of the flow meter, and of loss of pressure particularly in the peripheral zone of the impeller in the case of low pressure . Such drawbacks worsen the operation of the device.

Turbulence in the entry and/or the exit of known flow meters are also due to the lacking of systems which allow to govern the flow of liquid which passes through the device, and to the difficulty of directing with precision, namely in the case of low pressures, said flow on a tangential impeller.

In some other known devices for the measurement and/or the volumetric control, the movement of the impeller is revealed by optical detecting means, which senses the interruption, determined by the impeller, of a luminescent ray; said devices have therefore the drawback that they can operate only with transparent liquids.

All the devices for the measurement and/or the volumetric control of the known type have then the drawback of correctly operating only when used with liquids without impurities, such as sands or ferrous residues, being able to deposit at times between the vanes impeller and the body which houses it, so causing its jamming.

Another typical problem is due to the complexity of the components used in the known devices and their arrangement; for instance the use of tangential impellers makes the known devices for volumetric control complex, bulky, expensive and being of difficult maintenance and repairing.

As an example of the above cited known prior art, the devices subject of US-A-5.007.453, US-A- 4.428.088 and GB-B- 618.414 are cited.

It is also known to use said flow detector in connection with electrovalves the shutter of which is directly commanded in opening or closure by the electromagnet; such devices have the drawback of requiring high power for allowing the control of liquids being at high pressures.

Similar problems are also present in the case of known flow meters having an impeller whose axis of rotation is arranged in a coaxial way with respect to the direction of the flow to be measured or controlled; in some cases, the helical vanes of the impeller are mutually joined at their external ends by a ring (see for instance US-A-3,164,020, US-A-3,002,384 and US-A-3,053,087); said ring is at least partly realized in a magnetic material, for allowing the detection of the impeller rotation though a proper magnetic detector, but is not able to forcedly receive substantially the whole flow to be measured.

The main aim of the present invention is that of solving the above cited problems and in particular of indicating a device for the measurement and/or the volumetric control which is very precise in all the possible various operating conditions, both at the high and the low pressures, even with different flow rates or in presence of notable quantity of impurities, and which is furthermore simple, of low cost and of very reduced dimensions.

Such aim is attained according to the present invention by a device and a method for the measurement and/or the volumetric control of a fluid having the characterizing features of the annexed claims 1 and 26; further advantageous embodiments of the invention are contained in the dependent claims 2 to 25 and 27 to 29.

Further characteristics and advantages of the present inventions will result in being clear from the detailed description which follows and from the annexed drawings, supplied as a pure explanatory and not limiting example, wherein:
- figure 1 is a view in elevation of the device according to the present invention;
- figure 2 is a sectional view of the device according to invention, along line W-W of figure 1;
- figure 3 is a sectional view of a flow sensor making part of the device according to invention;
- figure 4 is an exploded view of the elements constituting the flow sensor of the device according to invention;
- figure 5 is a cross sectional view of the sensor of figure 3, along line X-X;
- figure 6 is a cross sectional view of the sensor of figure 3, along line Y-Y;
- figure 7 is a view, in a greater scale, of a particular of figure 2;
- figure 8 is a sectional view of the device according to invention, along line Z-Z of figure 1.

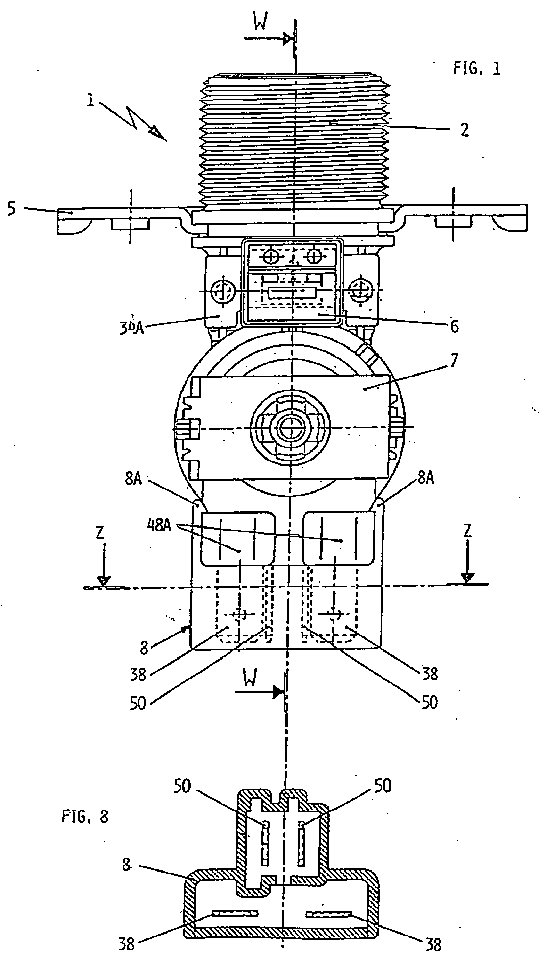

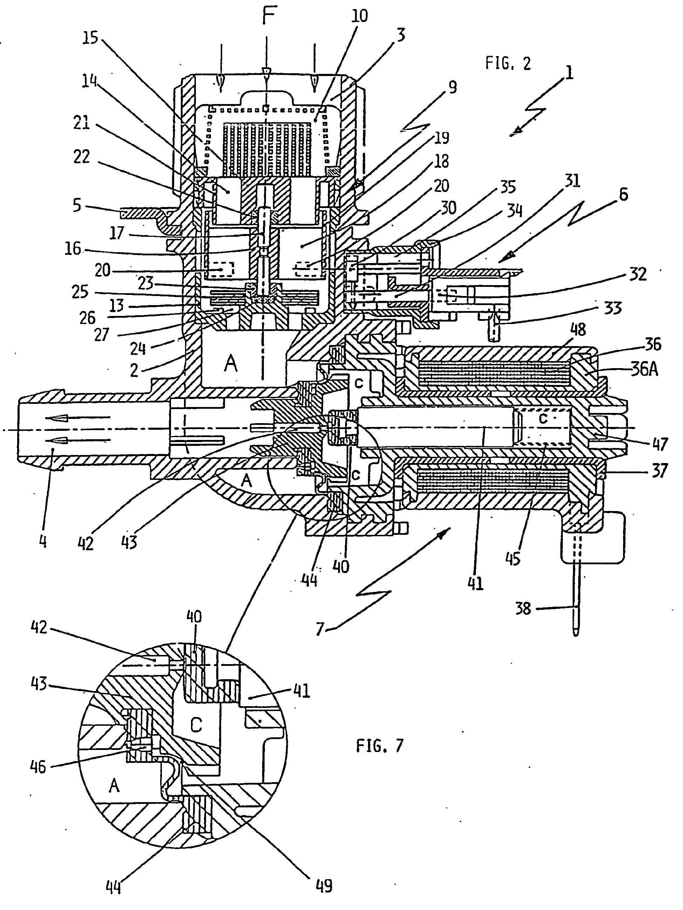

In figures 1 and 2, reference number 1 indicates as a whole the device being object of the present invention; such device 1 has a main body 2 comprising an inlet duct 3 for the liquid, which can be connected, for example to a tap of the water mains, and an outlet duct 4 for the liquid, which can be connected for example to a washing machine; onto body 2, which presents a flange 5 for its fixing to the washing machine, a detecting unit 6 and an electrovalve 7 are mounted, the latter being in particular of the unbalanced type; with 8 a connector/adapter is indicated (not represented in figure 2), having terminals for the electric supply of the electrovalve 7.

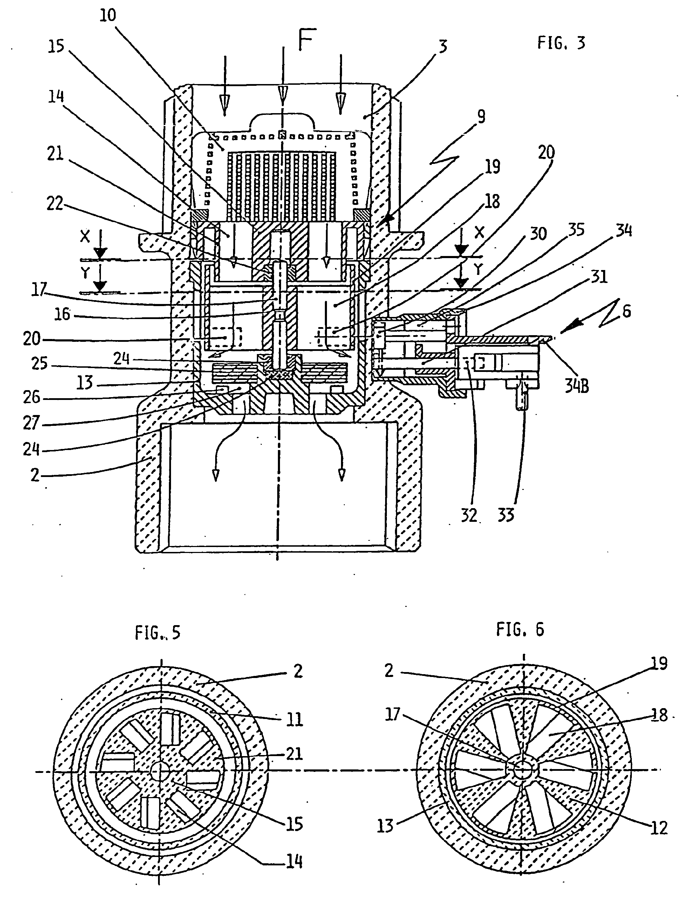

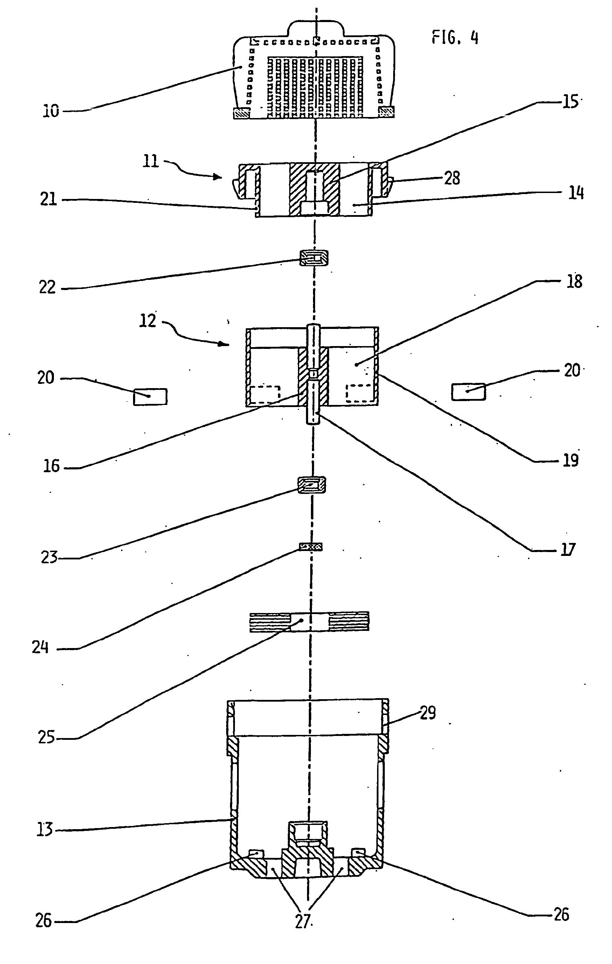

Within the inlet duct 3 a flow sensor is housed, indicated as a whole with 9; as it can be seen in figure 3 and 4, such a flow sensor 9, which is arranged under a filter 10, includes, in the given order a diffuser 11, an impeller 12 and a flow governor 13.

In figure 4 the flow sensor 9 is illustrated by means of an exploded view.

The diffuser 11, arranged under the filter 10, is able to convey the flow of liquid (F, figures 2 and 3) directly on the underlying impeller 12; to this purpose the diffuser 11 presents helical vanes 14, integral with a central core 15 and shaped in order to convey said flow (F) on the peripheral zone of the vanes (18) of the underlying impeller 12 (see also figure 5).

The impeller 12, idle and axial to the inlet duct 3 of the liquid, has a central core 16, integral with an axial pivot 17, and is provided with helical vanes 18, being tilted in the opposite direction with respect to the vanes 14 of the diffuser 11; the vanes 18 are mutually joined in their external part by a protection ring 19, on the external side of which, in correspondence of one or more vanes 18, magnetic elements 20 are inserted.

As it can be seen, in particular from figure 6, the diameter of the impeller 12 is such to determine the presence of a free passage between the protection ring 19 and the external body which houses it (that it is in practice the body of the flow governor 13, as it will be clear in the following); such a free passage has a dimension greater than the dimensions of meshes of the filter 10, in order to avoid the jamming of the impeller 12 in presence of small impurities; from figures 5 and 6 it can furthermore be seen how the central core 15 of the diffuser 11 has a diameter being greater than that of the central core 16 of the impeller 12.

The presence of the same protection ring 19 and of a narrowing (21) of the diffuser 11, allows in any case to avoid lateral dispersions, in the zone included between the external ends of vanes 18 and the cylindrical part (13) wherein the impeller rotates idle, and possible efficiency losses in the detection of the flow.

In this way an optimum efficiency is assured in the range of pressure being comprised between 0,1 bar and 10 bar, for flow rates even lower than 2-3 litre/minute.

The axial pivot 17, which realises the axis of rotation of the impeller 12, is supported at its ends by two bearings 22 and 23, one of which being supported on a thrust bearing bush 24: the bearing 22 is housed in the diffuser 11 while the bearing 23 and the bush 24 are housed in the underlying flow governor 13, that has the aim of stabilising the liquid flow (F).

The flow governor 13 is of the variable-section type and utilises the deformation of a membrane 25, resiliently deformable, which is subject to the action of the flow (F) for the self-adjustment of the liquid passage; with 26 spacers are indicated, being of calibrated height and distribution under membrane 25, which allow to limit the closure of an axial passage 27, and consequently to define a maximum flow.

The flow governor 13 and the diffuser 11 are shaped so as they can be mutually coupled, by means of reciprocal hooking means (which can be seen in 28 and 29), by forming with the impeller 12 a single compact structure, that allows for an easy and precise pre-assembling of the components.

As can be seen in figures 2 and 3, the cited components of the flow sensor 9 are housed in the inlet duct 3 of the liquid, in which a suitable seat can be provided.

External to such a duct 3, on the body 2 of the device 1, the detecting units 6 is fixed, which presents a magnetic detector 30 being in axis with the magnetic elements 20 of the impeller 12.

The magnetic detector 30 is mechanically and electrically connected to a printed circuit board 31, onto which electrically conductive tracks are obtained; one end of such a printed circuit board 31 is shaped in order to form a male connector 32, separably coupled with an electric connector 33, for the quick wiring with a processing/transducing electronic assembly, not represented.

The magnetic detector 30, the printed circuit board 31 and the male connector 32 are inserted in a protecting enclosure 34, comprising first terminals (34A, Figure 1) for the fixing to the body 2 of the device 1; second terminals (34B, Figure 3) are also provided for the fixing of the electric connector 33, which is fitted on the male connector 32 of the detecting units 6.

The enclosure 34 can be filled with impermeable and electrically insulating material 35, or can be obtained by thermoplastic moulding directly on the sensor 30, in order to protect the magnetic detector 30 from eventual water losses or in any way from the environmental humidity.

The electrovalve 7 (see figure 2) presents an electromagnet 36, composed by an induction winding or coil, obtained with electrically conductive wire being wound on a hollow spool 36A, and provided with a magnetic joke 37; the ends of the induction winding are electrically connected to a pair of supply terminals 38.

With 40 a plug is indicated, inserted in an end of an inductor or movable core 41; with 42 a central hole is indicated, realised in a disk 43 which supports a membrane 44; when the electromagnet 36 is not supplied at the electric terminals 38, the plug 40, through the movable core, is maintained by a spring 45 in the closing position of the central hole 42.

As can be seen in figure 7, the membrane 44 has calibrated holes 46 which, in conjunction with a conduit 49 obtained in the disk 43, are able to put in communication a chamber A, defined between the flow sensor 9 and the electrovalve 7, with a circular chamber C, delimited by the membrane 44 and the body 47 wherein the movable core 41 of the electromagnet 36 is arranged.

The electromagnet 36 is enclosed in a protective coating 48, obtained by thermoplastic material moulding and inserted onto body 47; such a coating 48 is provided with a zone (48A, figure 1) for the hooking of the connector/adapter 8.

Body 47, which houses the movable core 41, has a threaded part, that is screwed in a threaded open seat obtained in the body 2 of the device 1.

In figure 8 the connector/adapter 8 is represented in section, which is engaged onto zone 48A of the electromagnet 36 by means of mechanical hooking terminals (8A, figure 1); the connector/adapter 8 comprises two electric terminals 50 that, once coupled on the terminals 38 of the electromagnet, transform the latter ones in a connector being of common use, which allows to utilise the device with the different types of wiring normally available on trade (for example of the RAST 5 type).

The functioning of the device subject of the present invention is as follows.

With the electrovalve being closed, the liquid in pressure, present into chamber A, flows through the calibrated holes 46 in the circular chamber C: the pressure in the chamber C, which is greater than the pressure present in the outlet duct 4, determines a movement of the membrane 44 and of the disk 43 in the closing position of a passage which places in communication the chamber A and the outlet duct 4.

For the passage of the liquid through the device 1, the electrovalve 7, of the normally closed type, must be activated in opening, by supplying the electromagnet 36: to this purpose, the electrovalve 7 is electrically connected to the corresponding washing machine, which, through its own timer, provides to command at the appropriate instant (for example at the beginning of a washing phase) the supply of the electromagnet 36.

When such an electromagnet 36 is supplied, the movable core 41 is attracted, opening in this way the central hole 42 of the disk 43; this allows to bring the liquid in the outlet duct 4 at the same pressure present in the chamber C and, under the thrust of the liquid incoming from duct 3, to move the membrane 44 and the disk 43 in order to open the passage between the chamber A and the outlet duct 4.

The incoming liquid, after having been filtered by the meshes of the filter 10, is conveyed by vanes 14 of the diffuser 11 on the peripheral zone of the vanes 18 of the impeller 12, in order to increase the working couple which acts on the impeller even with low flow rates of liquid.

The impeller 12 is in this way activated in angular movement by the liquid flow; such flow which exits impeller 12 is stabilised by flow governor 13.

The liquid flows therefore in the chamber A, and then passes in the outlet duct 4, for finally reaching the utilising washing machine.

The rotation of the impeller 12, by means of the magnetic elements 20, is sensed by the magnetic detector 30 of the detecting units 6; the pulses being revealed by detector 30 are transmitted to an electronic assembly, that processes them, determines, on the basis of the revolutions/volume ratio the water quantity having passed, and transforms said pulses in an electric signal for the control of the electrovalve 7; in practice, when the quantity of liquid which is passed through the device 1 is equal the predetermined one, the electromagnet 36 is de-energised, and the movable nucleus 41 returns in its original position, so that plug 40 closes the central hole 42; in such a condition the chamber C returns to have a pressure being greater that the pressure present in the outlet duct 4, so determining a movement of the membrane 44 and of the disk 43 in the closure position of the passage between the chamber A and the outlet duct 4.

The device is therefore again in the initial conditions.

It should also be noted that the particular configuration described, with a flow sensor 9 arranged between the valve (7) for the interception of the liquid and the tap of the water mains, allows for a further optimisation of the functioning of the device.

In fact, during the closing cycle of the electrovalve 7, the emptying of the duct 3 wherein the impeller 12 is inserted, is avoided, so assuring a precise operation even in the first phases of the successive cycle of controlled delivery; also the measurement of the passing flow is therefore more correct, and any risks of initial turbulence upstream the flow sensor is also avoided.

From the given description the characteristics of the device subject of the present invention are clear, so as clear are its advantages. In particular:
- the use of the impeller 12, with a rotation axis being arranged coaxially in respect of the flow of fluid which has to be measured, avoids deviations of the fluid itself, which could negatively influence the operation of the device; for the same reason, the sensor may be easily equipped with a diffuser and with a flow governor, which allow to avoid turbulence and loss of pressure;
- the arrangement of the flow governor 13 downstream the impeller 12 allows a more precise measurement, if compared to the opposite configuration (with governor upstream the impeller) inasmuch as any turbulence that could influence the operation of the impeller 12 is avoided;
- the arrangement of the flow sensor 9 between the valve (7) for the interception of the liquid and the tap of the water mains (3) assures a precise operation since the first phases of the cycle of controlled delivery, with absence of any initial turbulence upstream the device;
- the protection ring 19 allows to optimise the efficiency of the impeller 12, because in this way the passage of ferrous impurities (normally present in the conduits of the water mains) in front of the magnetic elements 20 is avoided, which could accumulate with the consequent jamming of the impeller; the presence of a free circumferential space between the impeller 12 and the body that houses it (13), allows then to avoid eventual jammings due to residues not withheld by filter 10;
- the structure of the diffuser 11, with helical vanes 14 tilted in opposite direction in respect of the vanes 18 of the impeller 12, is apt at directing the liquid flow (F) mainly on the peripheral zone of the impeller vanes, in order to ensure a correct operation even at the low flow rates, inasmuch as the working torque that acts on the impeller 12 is increased; in this way an optimal efficiency is assured in the range of pressures between 0,1 bar and 10 bar, for flow rates even lower that 2-3 litres/minute: in this range of rates/pressures the precision of the device results in being very high, with tolerances, on controlled volumes, limited in the order of 2-3%, which cannot be found in systems having a comparable performances/size and cost ratio;
- the flow sensor 9, having the impeller axially mounted, reduces the turbulence in respect of the known prior art, where the fluid had to follow a path being different from the minimum one;
- the flow sensor 9, taking advantage from the impeller 12 being mounted axially to the flow to be measured and from its integrated assembly with the diffuser 11 and the governor 13, results in having a very compacts structure, and with a very reduced size: this allows its insertion in the common conduits for the connection to the water mains, normally of the 17 mm (3/4") Ø gas type;
- the flow sensor 9, the detecting unit 6 and the electromagnet 36 can be easily pre-assembled and pre-tested; the use of such pre-assembled parts simplifies the final assembling operation of the device, which can be realised with common automated systems; such flexibility allows to reduce the costs of the device and the risks of having scrap pieces as final product, and to adapt the product to different needs;
- the presence of a filter (10) upstream the flow sensor and the presence of the free circumferential space around the impeller (that it is of greater width in respect of the filter meshes), assures the correct operation of the device also in presence of impurities in the flow of fluid to be to measured.

From the above therefore results that the device according to invention noticeably simplifies and improves the precision of intervention and its field of application in respect of the devices of the known type, inasmuch as it correctly operates in very different conditions of use, even with different liquid flow rates or with high quantity of impurities, and in any case both in presence of high or low pressures (differences commonly present in the urban water mains).

It is clear that many changes are possible for the skilled-man to the device for the volumetric control, the metering and/or the distribution and/or the measurement of liquids, in particular for washing machines, described as an example, without departing from the novelty principles inherent the invention.

It is also clear that the flow sensor shown and described with reference to the use on a washing machine could be advantageously employed in different cases, even without an electrovalve, for instance in water distribution systems, in conjunction with meters.

## Claims

1. Device for the measurement and/or the control of a fluid, comprising
- a housing (2) having an inlet duct (3), which can be connected to a supply line of the fluid, an outlet duct (4), which can be connected to an apparatus utilizing the liquid being arranged downstream of the device,
- a flow sensor (9), for detecting the flow (F) of the fluid passing from the inlet duct (3) to the outlet duct (4),
said sensor (9) comprising an impeller (12) and a unit (6) for detecting the rotation of said impeller (12), wherein
- the axis of rotation (17) of said impeller (12) is arranged in a coaxial way with respect to the direction of said flow (F), and
- said impeller (12) comprises a core from which vanes (18) depart radially, said vanes (18) being mutually joined, at their external ends, by a ring (19),
- said impeller (12) rotating on an axial pivot (17),
conveying means (11) are provided upstream of said vanes (18) of said impeller (12) for directing said flow (F) towards said vanes (18), and said ring (19) is operative to receive said flow (F), **characterized in that** said conveying means comprise a diffuser (11) having helical vanes (14) integral with a central core (15), whereby the vanes (14) of said diffuser (11) are oriented in the opposite direction with respect to the vanes (18) of said impeller (12).

2. Device, according to claim 1, **characterized in that** flow regulating means (13) are provided for stabilizing said flow (F), said flow regulating means (13) being coaxial to the direction of said flow (F).

3. Device, according to claim 2, **characterized in that** said flow regulating means (13) are arranged downstream of said impeller (12).

4. Device, according to claim 2 or 3, **characterized in that** said flow regulating means comprise a flow governor (13) of the variable section type, having a resiliently deformable membrane (25) under which spacers (26) of calibrated height and distribution are defined.

5. Device, according to claim 1, **characterized in that** said conveying means (11) are arranged in a coaxial way with respect to said impeller (12).

6. Device, according to at least one of the previous claims, **characterized in that** the vanes (14) of said diffuser (11) convey said flow (F) on the peripheral zone of the vanes (18) of said impeller (12).

7. Device, according to at least one of the previous claims, **characterized in that** said central core (15) of said diffuser (11) has a diameter being greater than the diameter of the core (16) of said impeller (12).

8. Device, according to at least one of the previous claims, **characterized in that** said conveying means (11) have a narrowing (21).

9. Device, according to at least one of the previous claims, **characterized in that** said conveying means or diffuser (11) presents a narrowing (21), being apt to co-operate with said ring (19) of said impeller (12), to avoid lateral dispersions of said flow (F) and possible efficiency losses in the detection of the flow.

10. Device, according to at least one of the previous claims, **characterized in that** at least a portion of said conveying means or diffuser (11) is inserted within said ring (19) of said impeller (12).

11. Device, according to claim 1, **characterized in that** a structure is provided, within which said impeller (12) is rotatably mounted, said structure being realized through the mutual coupling of at least two distinct components (11,13), a conveying means (11) and a cylindrical part (13), and inserted within said inlet duct (3).

12. Device, according to claim 11, **characterized in that** said conveying means (11) and said cylindrical part (13) define reciprocal coupling means (28,29).

13. Device, according to the previous claim, **characterized in that** said conveying means (11) and said cylindrical part (13), once mutually coupled through said reciprocal coupling means (28,29), realize said structure.

14. Device, according to claim 10 or 11, **characterized in that** said reciprocal coupling means (28, 29) are hooking means (28, 29).

15. Device, according to at least one of the previous claims, **characterized in that** the dimensions of said inlet duct (3) are in the order of those of the common conduits for the connection to the water mains.

16. Device, according to claim 1, **characterized in that** said axial pivot (17) of said impeller (12) is supported at its ends by an upper and/or a lower bearing (22, 23).

17. Device, according to claims 1, 2, and 16, **characterized in that** said upper bearing (23) is coupled to said conveying means (11) and the lower bearing (23) being coupled to said cylindrical part (13).

18. Device, according to claim 1 or 11, **characterized in that**, in order to avoid the jamming of said impeller (12) in presence of small impurities, a free passage is present between said ring (19) and the body (13) which houses said impeller (12).

19. Device, according to the previous claim, **characterized in that** the dimensions of said free passage are greater than the meshes of a filtering element (10) being arranged upstream of said impeller (12).

20. Device, according to claim 1, **characterized in that** it comprises a flow intercepting device (7), in particular a normally-closed electric valve arranged downstream of said flow sensor (9) between said inlet duct (3) and said outlet duct (4).

21. Device, according to claim 1, **characterized in that** said detecting unit (6) comprises a detector (30) of the rotation of said impeller (12) arranged outside said inlet duct (3), which is apt at generating a control signal for said intercepting device (7).

22. Device, according to at least one of the previous claims, **characterized in that** said detecting unit (6) comprises an enclosure (34) having terminals (34A,34B) for its fixing to said housing (2) of the devices (1) and/or for the hooking of electrical connection means (33), said enclosure (34) being obtained by moulding thermoplastic material directly on said detector (30) and/or is filled with material being impermeable and/or electrically insulated (35), in order to protect said detector (30) from possible water losses or the environmental humidity.

23. Device, according to claim 20, **characterized in that** said intercepting device or valve (7) is electrically connected to said utilizing apparatus being downstream of the device (1) and that said utilizing apparatus is operative for controlling the opening of said intercepting device or valve (7).

24. Device, according to at least one of the previous claims, **characterized in that** said intercepting device or valve (7) comprises an electromagnet (36) having two terminals being of a first type (38) for the electric supply, and that an adapter (8) is provided, for transforming said two terminal of a first type (38) into two terminals being of different type (50), said electromagnet (36) and said adapter (8) having reciprocal hooking means (48,8A).

25. Device, according to one or more of the previous claims, **characterized in that** said flow sensor (9) and/or said detecting unit (6) and/or said intercepting device or valve (7) are elements being distinct in respect of said housing (2) and that the formers are fixed to the latter by means of reciprocal fixing means, said intercepting device or valve (7) having a portion apt at being screwed in a threaded seat obtained in said housing (2).

26. Method for the measurement and/or the volumetric control of a fluid flowing in a conduit having an inlet (3) and an outlet (4), by means of a flow sensor (9) which comprises:
- an impeller (12), having an axis of rotation (17) arranged in a coaxial way with respect to the direction of the flow (F) to be measured, and comprising a core from which vanes (18) depart radially, said vanes (18) being mutually joined by a ring (19), said impeller (12) rotating on an axial pivot (17),
- conveying means (11) for directing said flow (F) towards said vanes (18) of said impeller (12),
the method comprising the step of detecting the rotation of said impeller (12), for determining on the basis of the number of revolutions of said impeller (12) the quantity of fluid which passes in said conduit,
**characterized by** the step of driving, upstream of said vanes (18), said flow (F) by said conveying means (11), so as to convey said flow (F) into said ring (19) which directs said flow (F) onto said vanes (18), in order to avoid lateral dispersions of the flow (F) and/or the deposit of impurities on the external part of said vanes (18) or said ring (19).

27. Method, according to claim 26, **characterized by** regulating the flow (F) to be measured in a point of said conduit which is downstream of said impeller (12).

28. Method, according to claim 26, **characterized by** conveying onto said vanes (18) the flow (F) to be measured with an orientation being opposite with respect to the inclination of said vanes (18).

## Patentansprüche

1. Vorrichtung zur Messung und / oder Regelung eines Fluids, Folgendes umfassend:
- ein Gehäuse (2), welches ein Einlassrohr (3) aufweist, das mit einer Zuleitung des Fluids verbunden werden kann, ein Auslassrohr (4), das mit einer die Flüssigkeit nutzenden Einrichtung verbunden werden kann, die an der Auslass-Seite der Vorrichtung eingerichtet ist,
- einen Strömungssensor (9) zum Erfassen der Strömung (F) des Fluids, welches von dem Einlassrohr (3) zu dem Auslassrohr (4) hindurchtritt,
wobei der Sensor (9) ein Flügelrad (12) und eine Einheit (6) zum Erfassen der Rotation des Flügelrades (12) umfasst, wobei
- die Rotationsachse (17) des Flügelrades (12) bezüglich der Richtung der Strömung (F) in einer koaxialen Weise eingerichtet ist und
- das Flügelrad (12) einen Kern umfasst, von dem sich Flügel (18) radial entfernen, wobei die Flügel (18) an ihren äußeren Enden durch einen Ring (19) miteinander verbunden sind,
- das Flügelrad (12) auf einem Axialzapfen (17) rotiert,
wobei Beförderungsmittel (11) vor den Flügeln (18) des Flügelrades (12) vorgesehen sind, zum Lenken der Strömung (F) in Richtung auf die Flügel (18), und der Ring (19) wirksam ist, um die Strömung (F) aufzunehmen, **dadurch gekennzeichnet, dass** die Beförderungsmittel einen Diffusor (11) umfassen, welcher schraubenförmige Flügel (14) aufweist, die integral mit einem Zentral kern (15) gebildet sind, wobei die Flügel (14) des Diffusors (11) in der bezüglich der Flügel (18) des Flügelrades (12) entgegengesetzten Richtung ausgerichtet sind.

2. Vorrichtung nach Anspruch 1, **dadurch gekennzeichnet, dass** Strömungsregulierungsmittel (13) zum Stabilisieren der Strömung (F) vorgesehen sind, wobei die Strömungsregulierungsmittel (13) koaxial zu der Richtung der Strömung (F) eingerichtet sind.

3. Vorrichtung nach Anspruch 2, **dadurch gekennzeichnet, dass** die Strömungsregulierungsmittel (13) hinter dem Flügelrad (12) eingerichtet sind.

4. Vorrichtung nach Anspruch 2 oder 3, **dadurch gekennzeichnet, dass** die Strömungsregulierungsmittel einen Durchflussregler (13) des Typs mit variablem Querschnitt umfassen, der eine elastisch verformbare Membran (25) aufweist, unter welcher Abstandshalter (26) mit kalibrierter Höhe und Ausbreitung definiert sind.

5. Vorrichtung nach Anspruch 1, **dadurch gekennzeichnet, dass** die Beförderungsmittel (11) in Bezug zu dem Flügelrad (12) in einer koaxialen Weise eingerichtet sind.

6. Vorrichtung nach wenigstens einem der vorherigen Ansprüche, **dadurch gekennzeichnet, dass** die Flügel (14) des Diffusors (11) die Strömung (F) auf die Randzone der Flügel (18) des Flügelrades (12) leiten.

7. Vorrichtung nach wenigstens einem der vorherigen Ansprüche, **dadurch gekennzeichnet, dass** der Zentralkern (15) des Diffusors (11) einen Durchmesser aufweist, der größer ist als der Durchmesser von dem Kern (16) des Flügelrades (12).

8. Vorrichtung nach wenigstens einem der vorherigen Ansprüche, **dadurch gekennzeichnet, dass** die Beförderungsmittel (11) eine Verengung (21) aufweisen.

9. Vorrichtung nach zumindest einem der vorhergehenden Ansprüche, **dadurch gekennzeichnet, dass** die Beförderungsmittel oder der Diffusor (11) eine Verengung aufweisen (21), die geeignet ist, um mit dem Ring (19) des Flügelrades (12) zusammenzuwirken, um ein laterales Ausbreiten der Strömung (F) und mögliche Leistungsminderungen bei der Erfassung der Strömung zu vermeiden.

10. Vorrichtung nach zumindest einem der vorhergehenden Ansprüche, **dadurch gekennzeichnet, dass** zumindest ein Abschnitt der Beförderungsmittel oder des Diffusors (11) in den Ring (19) des Flügelrades (12) eingeführt ist.

11. Vorrichtung nach Anspruch 1, **dadurch gekennzeichnet, dass** eine Anordnung bereitgestellt wird, in der das Flügelrad (12) rotierbar befestigt ist, wobei die Anordnung durch das gegenseitige Koppeln von zumindest zwei einzelnen Komponenten (11, 13) - ein Beförderungsmittel (11) und ein zylindrisches Bauteil (13) - realisiert wird und in das Einlassrohr (3) eingeführt ist.

12. Vorrichtung nach Anspruch 11, **dadurch gekennzeichnet, dass** die Beförderungsmittel (11) und das zylindrische Bauteil (13) gegenseitige Kopplungsmittel (28, 29) definieren.

13. Vorrichtung nach dem vorhergehenden Anspruch, **dadurch gekennzeichnet, dass** die Beförderungsmittel (11) und das zylindrische Bauteil (13), sobald diese durch die gegenseitigen Kopplungsmittel (28, 29) miteinander gekoppelt sind, diese Anordnung realisieren.

14. Vorrichtung nach Anspruch 10 oder 11, **dadurch gekennzeichnet, dass** die gegenseitigen Kopplungsmittel (28, 29) Anschlussmittel (28, 29) sind.

15. Vorrichtung nach zumindest einem der vorhergehenden Ansprüche, **dadurch gekennzeichnet, dass** die Abmessungen des Einlassrohres (3) in der Größenordnung von denen der gewöhnlichen Rohrleitungen für die Verbindung zu der Hauptwasserleitung liegen.

16. Vorrichtung nach Anspruch 1, **dadurch gekennzeichnet, dass** der Axialzapfen (17) des Flügelrades (12) an seinen Enden durch eine obere und / oder eine untere Halterung (22, 23) gestützt wird.

17. Vorrichtung nach den Ansprüchen 1, 2 und 16, **dadurch gekennzeichnet, dass** die obere Halterung (23) mit den Beförderungsmitteln (11) gekoppelt ist und die untere Halterung (23) mit dem zylindrischen Bauteil (13) gekoppelt ist.

18. Vorrichtung nach Anspruch 1 oder 11, **dadurch gekennzeichnet, dass** ein freier Durchgang zwischen dem Ring (19) und dem Körper (13), welcher das Flügelrad (12) unterbringt, vorhanden ist, um das Blockieren des Flügelrades (12) bei dem Auftreten von kleinen Verunreinigungen zu verhindern.

19. Vorrichtung nach dem vorhergehenden Anspruch, **dadurch gekennzeichnet, dass** die Abmessungen des freien Durchgangs größer sind als die der Maschen eines Filterelements (10), welches vor dem Flügelrad (12) eingerichtet ist.

20. Vorrichtung nach Anspruch 1, **dadurch gekennzeichnet, dass** sie eine Strömungsunterbrechungsvorrichtung (7) umfasst, insbesondere ein drucklos geschlossenes Elektroventil, das hinter dem Strömungssensor (9), zwischen dem Einlassrohr (3) und dem Auslassrohr (4) eingerichtet ist.

21. Vorrichtung nach Anspruch 1, **dadurch gekennzeichnet, dass** die Erfassungseinheit (6) einen Detektor (30) für die Rotation des Laufrades (12) umfasst, der außerhalb des Einlassrohres (3) eingerichtet ist und der in der Lage ist, ein Steuersignal für die Unterbrechungsvorrichtung (7) zu erzeugen.

22. Vorrichtung nach zumindest einem der vorhergehenden Ansprüche, **dadurch gekennzeichnet, dass** die Erfassungseinheit (6) ein Gehäuse (34) umfasst, welches Anschlüsse (34 A, 34 B) aufweist, um dieses an dem Gehäuse (2) der Vorrichtungen (1) zu befestigen und / oder für das Anschließen von elektrischen Verbindungsmitteln (33), wobei das Gehäuse (34) durch das Formen von thermoplastischem Material direkt auf dem Detektor (30) erzielt wird und / oder mit Material gefüllt ist, welches undurchlässig und / oder elektrisch isoliert (35) ist, um den Detektor (30) vor möglichen Wasserverlusten oder der Umgebungsfeuchtigkeit zu schützen.

23. Vorrichtung nach Anspruch 20, **dadurch gekennzeichnet, dass** die Unterbrechungsvorrichtung oder das Ventil (7) mit der nutzenden Einrichtung elektrisch verbunden ist, welche hinter der Vorrichtung (1) eingerichtet ist, und dass die nutzende Einrichtung zur Regelung der Öffnung der Unterbrechungsvorrichtung oder des Ventils (7) betriebsbereit ist.

24. Vorrichtung nach zumindest einem der vorhergehenden Ansprüche, **dadurch gekennzeichnet, dass** die Unterbrechungsvorrichtung oder das Ventil (7) einen Elektromagneten (36) umfasst, der zwei Anschlüsse von einem ersten Typ (38) für die Stromversorgung aufweist, und dass ein Adapter (8) vorgesehen ist, zum Umwandeln der zwei Anschlüsse (38) eines ersten Typs (38) in zwei Anschlüsse eines anderen Typs (50), wobei der Elektromagnet (36) und der Adapter (8) wechselseitige Anschlussmittel (48, 8 A) aufweisen.

25. Vorrichtung nach einem oder mehreren der vorhergehenden Ansprüche, **dadurch gekennzeichnet, dass** der Strömungssensor (9) und / oder die Erfassungseinheit (6) und / oder die Unterbrechungsvorrichtung oder das Ventil (7) Elemente sind, die in Bezug zu dem Gehäuse (2) einen getrennten Zustand aufweisen, und dass die Ersteren an dem Letzteren durch gegenseitige Befestigungsmittel befestigt sind, wobei die Unterbrechungsvorrichtung oder das Ventil (7) einen Abschnitt aufweist, der geeignet ist, um in einen Gewindesitz in dem Gehäuse (2) hineingeschraubt zu werden.

26. Verfahren zur Messung und / oder volumetrischen Regelung eines Fluids, das in einem Rohr mit einem Einlass (3) und einem Auslass (4) fließt, mittels eines Strömungssensors (9), welches Folgendes umfasst:
- ein Flügelrad (12), welches eine Rotationsachse (17) aufweist, die bezüglich der Richtung der zu messenden Strömung (F) in einer koaxialen Weise eingerichtet ist, und einen Kern umfasst, von dem sich Flügel (18) radial entfernen, wobei die Flügel (18) durch einen Ring (19) miteinander verbunden sind, wobei das Flügelrad (12) auf einem Axialzapfen (17) rotiert,
- Beförderungsmittel (11) zum Lenken der Strömung (F) in Richtung auf die Flügel (18) des Flügelrades (12),
wobei das Verfahren den Schritt des Erfassens der Rotation des Flügelrades (12) umfasst, um auf der Basis der Anzahl von Umdrehungen des Flügelrades (12) die Menge von Fluid zu bestimmen, welches durch dieses Rohr hindurchtritt,
**gekennzeichnet durch** den Schritt des Lenkens der Strömung (F) vor den Flügeln (18) **durch** die Beförderungsmittel (11), um die Strömung (F) in den Ring (19) zu führen, der die Strömung (F) auf die Flügel (18) leitet, um ein laterales Ausbreiten der Strömung (F) und / oder die Ablagerung von Unreinheiten auf dem äußeren Abschnitt der Flügel (18) oder dem Ring (19) zu verhindern.

27. Verfahren nach Anspruch 26, **gekennzeichnet durch** das Einstellen der zu messenden Strömung (F) an einem Punkt des Rohres, welcher hinter dem Flügelrad (12) eingerichtet ist.

28. Verfahren nach Anspruch 26, **gekennzeichnet durch** das Befördern der zu messenden Strömung (F) auf die Flügel (18) mit einer in Bezug zu der Neigung der Flügel (18) entgegengesetzten Ausrichtung.

## Revendications

1. Dispositif de mesure et/ou de commande d'un fluide, comprenant :
- un boîtier (2) ayant une canalisation d'entrée (3), qui peut être raccordée à une conduite d'alimentation en fluide, une canalisation de sortie (4), qui peut être raccordée à un appareil utilisant le liquide, agencé en aval du dispositif,
- un capteur d'écoulement (9) pour détecter l'écoulement (F) du fluide passant de la canalisation d'entrée (3) à la canalisation de sortie (4),
ledit capteur (9) comprenant une hélice (12) et une unité (6) pour détecter la rotation de ladite hélice (12), dans lequel
- l'axe de rotation (17) de ladite hélice (12) est agencé de manière coaxiale par rapport à la direction dudit écoulement (F), et
- ladite hélice (12) comprend une âme de laquelle partent radialement des aubes (18), lesdites aubes (18) étant jointes les unes aux autres, à leurs extrémités externes, par un anneau (19),
- ladite hélice (12) tournant sur un pivot axial (17),
des moyens de transport (11) étant fournis en amont desdites aubes (18) de ladite hélice (12) pour diriger ledit écoulement (F) vers lesdites aubes (18), et ledit anneau (19) étant à même de recevoir ledit écoulement (F), **caractérisé en ce que** lesdits moyens de transport comprennent un diffuseur (11) ayant des aubes hélicoïdales (14) faisant partie intégrante d'une âme centrale (15), les aubes (14) dudit diffuseur (11) étant orientées dans la direction opposée par rapport aux aubes (18) de ladite hélice (12).

2. Dispositif selon la revendication 1, **caractérisé en ce que** des moyens régulateurs d'écoulement (13) sont fournis pour stabiliser ledit écoulement (F), lesdits moyens régulateurs d'écoulement (13) étant coaxiaux par rapport à la direction dudit écoulement (F).

3. Dispositif selon la revendication 2, **caractérisé en ce que** lesdits moyens régulateurs d'écoulement (13) sont fournis en aval de ladite hélice (12).

4. Dispositif selon la revendication 2 ou 3, **caractérisé en ce que** lesdits moyens régulateurs d'écoulement comprennent un régulateur d'écoulement (13) du type à section variable, ayant une membrane (25) déformable élastiquement en dessous de laquelle sont définis des espaceurs (26) de hauteur et de distribution calibrées.

5. Dispositif selon la revendication 1, **caractérisé en ce que** lesdits moyens de transport (11) sont agencés de manière coaxiale par rapport à ladite hélice (12).

6. Dispositif selon au moins l'une quelconque des revendications précédentes, **caractérisé en ce que** les aubes (14) dudit diffuseur (11) transportent ledit écoulement (F) sur la zone périphérique des aubes (18) de ladite hélice (12).

7. Dispositif selon au moins l'une quelconque des revendications précédentes, **caractérisé en ce que** ladite âme centrale (15) dudit diffuseur (11) a un diamètre qui est supérieur au diamètre de l'âme (16) de ladite hélice (12).

8. Dispositif selon au moins l'une quelconque des revendications précédentes, **caractérisé en ce que** lesdits moyens dé transport (11) présentent un rétrécissement (21).

9. Dispositif selon au moins l'une quelconque des revendications précédentes, **caractérisé en ce que** lesdits moyens de transport ou ledit diffuseur (11) présente (nt) un rétrécissement (21), qui est à même de coopérer avec ledit anneau (19) de ladite hélice (12) pour empêcher des dispersions latérales dudit écoulement (F) et d'éventuelles pertes d'efficacité dans la détection de l'écoulement.

10. Dispositif selon au moins l'une quelconque des revendications précédentes, **caractérisé en ce qu'**au moins une partie desdits moyens de transport ou dudit diffuseur (11) est insérée dans ledit anneau (19) de ladite hélice (12).

11. Dispositif selon la revendication 1, **caractérisé en ce qu'**il est prévu une structure à l'intérieur de laquelle ladite hélice (12) est montée à rotation, ladite structure étant réalisée par l'accouplement mutuel d'au moins deux composants distincts (11, 13), un moyen de transport (11) et une pièce cylindrique (13), et insérée à l'intérieur de ladite canalisation d'entrée (3).

12. Dispositif selon la revendication 11, **caractérisé en ce que** ledit moyen de transport (11) et ladite pièce cylindrique (13) définissent des moyens d'accouplement mutuel (28, 29).

13. Dispositif selon la revendication précédente, **caractérisé en ce que** ledit moyen de transport (11) et ladite pièce cylindrique (13), une fois mutuellement couplés à travers lesdits moyens d'accouplement mutuel (28, 29), réalisent ladite structure.

14. Dispositif selon la revendication 10 ou 11, **caractérisé en ce que** lesdits moyens d'accouplement mutuel (28, 29) sont des moyens d'accrochage (28, 29).

15. Dispositif selon au moins l'une quelconque des revendications précédentes, **caractérisé en ce que** les dimensions de ladite canalisation d'entrée (3) sont de l'ordre de celles des conduites courantes utilisées pour le raccordement au réseau de distribution de l'eau.

16. Dispositif selon la revendication 1, **caractérisé en ce que** ledit pivot axial (17) de ladite hélice (12) est supporté, à ses extrémités, par un palier supérieur et/ou un palier inférieur (22, 23).

17. Dispositif selon la revendication 1, 2 et 16, **caractérisé en ce que** ledit palier supérieur (23) est couplé audit moyen de transport (11) et le palier inférieur (23) est couplé à ladite pièce cylindrique (13).

18. Dispositif selon la revendication 1 ou 11, **caractérisé en ce que**, pour empêcher le coincement de ladite hélice (12) en présence de petites impuretés, un passage libre est présent entre ledit anneau (19) et le corps (13) qui loge ladite hélice (12).

19. Dispositif selon la revendication précédente, **caractérisé en ce que** les dimensions dudit passage libre sont plus grandes que celles des mailles d'un élément filtrant (10) aménagé en amont de ladite hélice (12).

20. Dispositif selon la revendication 1, **caractérisé en ce qu'**il comprend un dispositif d'interception d'écoulement (7), en particulier une électrovanne normalement fermée, aménagée en aval dudit capteur d'écoulement (9) entre ladite canalisation d'entrée (3) et ladite canalisation de sortie (4).

21. Dispositif selon la revendication 1, **caractérisé en ce que** ladite unité de détection (6) comprend un détecteur (30) de la rotation de ladite hélice (12) agencé à l'extérieur de ladite canalisation d'entrée (3), qui est à même de générer un signal de commande pour ledit dispositif d'interception (7).

22. Dispositif selon au moins l'une quelconque des revendications précédentes, **caractérisé en ce que** ladite unité de détection (6) comprend une enceinte (34) ayant des bornes (34A, 34B) pour sa fixation sur ledit boîtier (2) des dispositifs (1) et/ou pour l'accrochage de moyens de connexion électriques (33), ladite enceinte (34) étant obtenue par moulage d'un matériau thermoplastique directement sur ledit détecteur (30) et/ou est remplie d'un matériau imperméable et/ou électriquement isolé (35), pour protéger ledit détecteur (30) d'éventuelles pertes d'eau ou de l'humidité environnante.

23. Dispositif selon la revendication 20, **caractérisé en ce que** ledit dispositif d'interception ou vanne d'interception (7) est raccordé électriquement audit appareil utilisateur en aval du dispositif (1) et **en ce que** ledit appareil utilisateur sert à commander l'ouverture dudit dispositif ou vanne d'interception (7).

24. Dispositif selon au moins l'une quelconque des revendications précédentes, **caractérisé en ce que** ledit dispositif ou vanne d'interception (7) comprend un électro-aimant (36) ayant deux bornes d'un premier type (38) pour l'alimentation électrique et **en ce qu'**un adaptateur (8) est fourni pour transformer lesdites deux bornes d'un premier type (38) en deux bornes de type différent (50), ledit électro-aimant (36) et ledit adaptateur (8) ayant des moyens d'accrochage mutuel (48, 8A).

25. Dispositif selon une ou plusieurs des revendications précédentes, **caractérisé en ce que** ledit capteur d'écoulement (9) et/ou ladite unité de détection (6) et/ou ledit dispositif ou vanne d'interception (7) sont des éléments distincts par rapport audit boîtier (2) et **en ce que** les premiers sont fixés sur le dernier à l'aide de moyens de fixation mutuelle, ledit dispositif ou vanne d'interception (7) ayant une partie qui peut être vissée dans un siège taraudé obtenu dans ledit boîtier (2).

26. Procédé pour la mesure et/ou la commande volumétrique d'un fluide s'écoulant dans une conduite ayant une entrée (3) et une sortie (4), à l'aide d'un capteur d'écoulement (9) qui comprend :
- une hélice (12) ayant un axe de rotation (17) agencé de manière coaxiale par rapport à la direction de l'écoulement (F) à mesurer, et comprenant une âme de laquelle des aubes (18) partent radialement, lesdites aubes (18) étant mutuellement jointes par un anneau (19), ladite hélice (12) tournant sur un pivot axial (17),
- des moyens de transport (11) pour diriger ledit écoulement (F) vers lesdites aubes (18) de ladite hélice (12),
le procédé comprenant l'étape de détection de la rotation de ladite hélice (12) pour déterminer, en se basant sur le nombre de révolutions de ladite hélice (12), la quantité de fluide qui passe dans ladite conduite,
**caractérisé par** l'étape d'entraînement, en amont desdites aubes (18), dudit écoulement (F) par lesdits moyens de transport (11) de manière à acheminer ledit écoulement (F) dans ledit anneau (19) qui dirige ledit écoulement (F) sur lesdites aubes (18), pour empêcher des dispersions latérales de l'écoulement (F) et/ou le dépôt d'impuretés sur la partie externe desdites aubes (18) ou dudit anneau (19).

27. Procédé selon la revendication 26, **caractérisé par** la régulation de l'écoulement (F) à mesurer en un point de ladite conduite qui est en aval de ladite hélice (12).

28. Procédé selon la revendication 26, **caractérisé par** l'acheminement sur lesdites aubes (18) de l'écoulement (F) à mesurer avec une orientation opposée par rapport à l'inclinaison desdites aubes (18).
